# EUROPEAN PATENT SPECIFICATION

(11) **EP 1 326 317 B1**
(45) Date of publication and mention of the grant of the patent: **14.04.2004**
(21) Application number: 02425001.1
(22) Date of filing: 03.01.2002
(51) Int. Cl.: H02H 3/093, H02H 3/00

(54) **Method for improving the electric protection in electric systems, electric circuit and protection system implementing it**
Verfahren zur Verbesserung des elektrischen Schutzes in elektrischen Anlagen, sowie elektrische Schaltung und Schutzsystem zur Durchführung des Verfahrens
Procédé pour améliorer la protection électrique dans des systèmes électriques, circuit électrique et système de protection pour la mise en oeuvre du procédé

(43) Date of publication of application: 09.07.2003
(73) Proprietor: ELIND SRL, I-20041 Agrate Brianza (IT)
(72) Inventor: Marin, Adriano, 35042 Este (Padova) (IT); Franceschin, Simone, 35042 Este (Padova) (IT); Schiavon, Alberto, 35042 Este (Padova) (IT); Martinello, Fabio, 35042 Este (Padova) (IT)
(74) Representative: De Ros, Alberto

(56) References cited:
- JP-A- 10 233 154
- US-A- 5 581 433
- US-A- 5 627 716
- US-A- 5 943 203
- ZAVIS W M: "Enhancements to microprocessor-based tripping systems for low voltage power circuit breakers" INDUSTRY APPLICATIONS SOCIETY ANNUAL MEETING, 1993., CONFERENCE RECORD OF THE 1993 IEEE TORONTO, ONT., CANADA 2-8 OCT. 1993, NEW YORK, NY, USA,IEEE, US, 2 October 1993 (1993-10-02), pages 1529-1535, XP010118670 ISBN: 0-7803-1462-X
- PATENT ABSTRACTS OF JAPAN vol. 2000, no. 22, 9 March 2001 (2001-03-09) & JP 2001 128354 A (MITSUBISHI ELECTRIC CORP), 11 May 2001 (2001-05-11)

## Description

The present invention relates mainly to a method for improving the electric protection in electric systems according to the preamble of claim 1.

All electric systems require an electric energy source to operate. Many electric systems take electric energy from external supply electric mains. These electric mains can be of alternating current or of direct current (civil, industrial, telephonic, TNV, etc.). In these cases, it becomes useful the use of line automatic mechanical breakers fundamentally for two technical reasons: for having access to the circuits of the electric system, for example, for maintenance without risks for personnel, and for protecting both the electric mains and the users in case a failure or an accidental contact could cause electrocutions, overheating or fires.

Therefore, the use of such mechanical breakers is much widespread also because of the electric safety standards in force at the national and at the international level, that, for many electric systems, require their use.

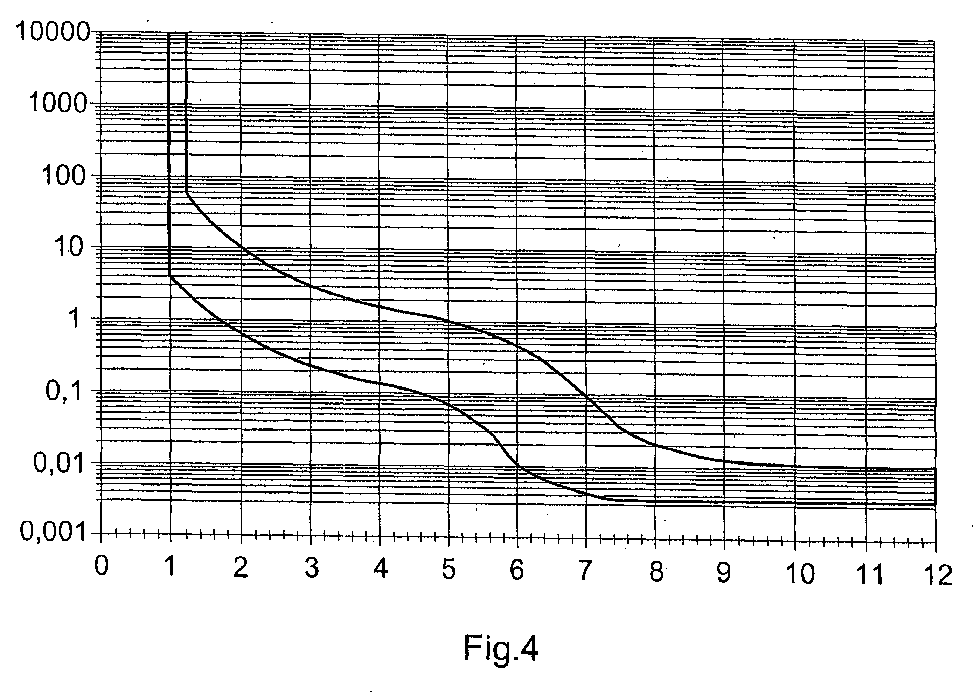

In many cases, the breaker (that constitutes the general electric protection device of the electric system) comprises a magneto-thermal breaker device in combination with a differential current breaker; alternatively, it may consists of a relay or of a contactor driven by line current or of another automatic protection device. The intervention time of a device of these types depends on the current intensity that flows through it and on its own intrinsic speed characteristic (delay, semidelay, fast, etc.). By way of example, in the attached Fig.4 it is shown the intervention characteristic of a magneto-thermal breaker on a Cartesian plane in which in the ordinate, with logarithmic scale, is written the intervention time of the breaker in seconds, and in the abscissa, with linear scale, is written the ratio between the breaker current and the nominal current; the breaker considered has a nominal current of 25 Ampere and the two curves in the figure represent respectively the minimum and maximum intervention time of the breaker in relation to a constant current flowing through it; this characteristic has intrinsic uncertainties (for small currents, medium currents and large currents) that depend on factors hardly predictable by the user of the breaker.

Through the general protection device several user electric units are usually power supplied; these are usually provided with their own local electric protection devices such as fuses, restorable fuses, PTC resistors, relays, magneto-thermal breakers (with nominal current lower than the one of the general protection device), or other similar devices.

Some examples of such a situation are:
- a telecommunication exchange in which the supply mains are of direct current and the user units are the boards performing the different functions in the exchange;
- a house in which the supply mains are the public ones for civil use at 230V and 50Hz alternating current and the user units are, for example, the different electric household appliances;
- an automated industrial plant in which the supply mains are the public ones for industrial use and the user units are the different machines.

Both the general protection device of the electric system and the local protection devices of the user electric units have intervention characteristics that are much variable and hardly predictable with extreme precision. This is due to the fact that they are electric devices essentially based on thermal and/or magnetic and/or mechanical effects; therefore, a precise co-ordinated protection through such devices is hard to be obtained. Moreover, for these reasons, there could happen undesired interventions of the general protection device, for example, in the following cases:
- one of the user units gives rise to a temporary current overconsumption situation without being in failure;
- one of the user units is in failure but the local protection device does not intervene or intervenes too late;
- in the supply mains there happens a common mode or differential mode voltage transient;

in these cases, in fact, these are either temporary anomalies in the power supplied to a user unit or to the whole system, or permanent anomalies of only one user unit, so the permanent interruption in the power supplied to the whole system is a protection measure effective but exaggerated.

In case of an undesired intervention of the general protection device, all the user units remain without power and the service that the electric system (telephone exchange, house, industrial plant) provides is completely interrupted.

The restoration of the service requires, in general, the physical intervention of an operator in order to restore/reset manually the general protection device.

The cost caused by the undesired intervention of the general protection device may be, in certain cases, very high because it requires the physical intervention of an operator and because of the long interruption of the service that it implies.

Patent US 5.581,433, discloses an electronic breaker to be connected to an active computer bus; the breaker is designed so that, as soon as the output current exceeds a fault current level, a capacitor begins to charge and the output current is limited to a maximum current level; once the voltage across the capacitor reaches a predetermined value, a temporary interruption in the output power is performed; the cycle repeats uritil the fault disappears. Such functionality is especially useful for limiting in-rush currents (like when a device is connected to an active bus) but is not adapted to deal with situations like (permanent) short circuits; in fact, in this case, the cycle would repeat forever and the load would be highly energised periodically.

Object of the present invention is to overcome the drawbacks of the known art and, particularly, to provide a method for improving the electric protection of electric systems protected by traditional breaker devices trying to avoid all the unnecessary interventions (therefore undesired) and trying to assure all necessary interventions (therefore desired), and that can be implemented in an easy and economic way.

This object is substantially achieved through the method having the functionalities set out in independent claim 1; further advantageous features of the method according to the present invention are set out in the dependent claims.

The basic idea of the present method is to prevent the intervention of the breaker device and the consequent permanent power interruption, and to perform a temporary power interruption of a predetermined duration in such a way that eventual temporary anomalies may end and/or exhaust.

According to further aspects, the present invention relates also to an electric circuit, a protection system, a power supply system and an electric system having the features set out respectively in claims 13, 20, 26 and 27, that implement such method.

The invention will become clearer from the following description to be considered in conjunction with the accompanying drawings, that must be considered not in a restrictive sense but only in a descriptive sense, wherein:
Fig. 1 shows the block diagram of an electric system according to the present invention;
Fig. 2 shows the block diagram of an electric circuit according to the present invention;
Fig. 3 shows a mixed block and schematic diagram of an electric circuit according to the present invention;
Fig. 4 shows the intervention characteristic of a traditional magneto-thermal breaker;
Fig. 5 shows the waveform of the supply current of an electric system in different anomalous cases;
Fig. 6 shows the waveform of the supply current of an electric system according to the present invention when a first failure happens; and
Fig. 7 shows the waveform of the supply current of an electric system according to the present invention when a second failure happens.

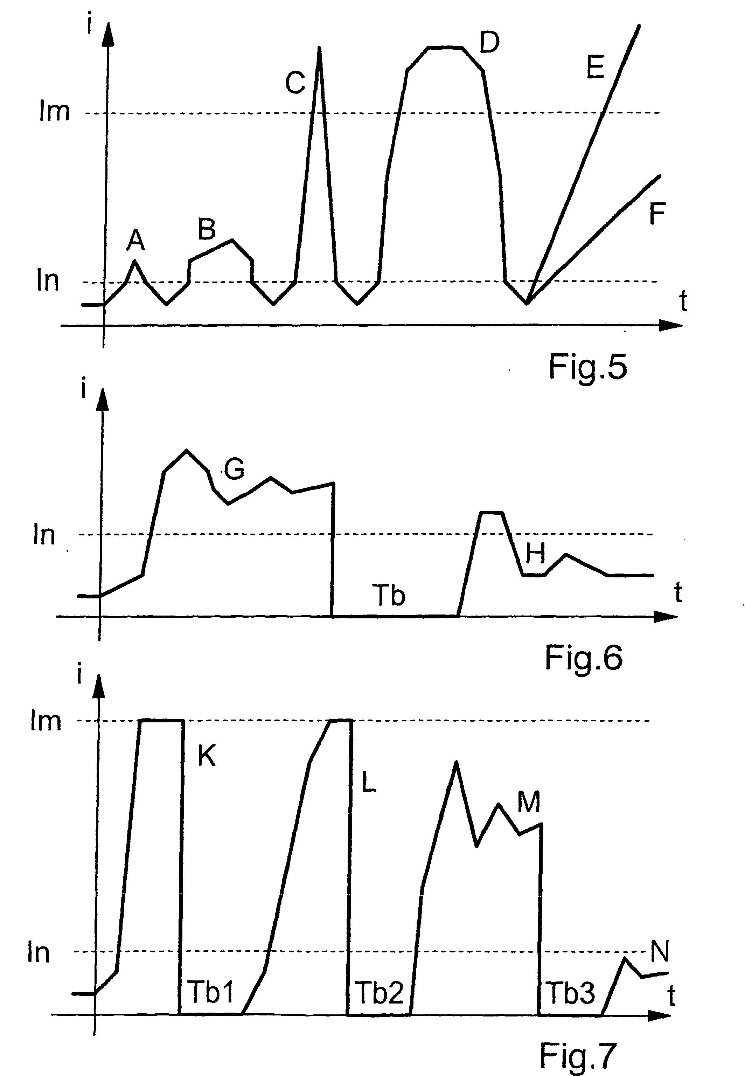

It has to specified that the waveforms of Fig.5, Fig.6 and Fig.7 have to be considered purely as schematic helps for a better comprehension of the description, and their absolute and relative dimensions are neither representative nor binding.

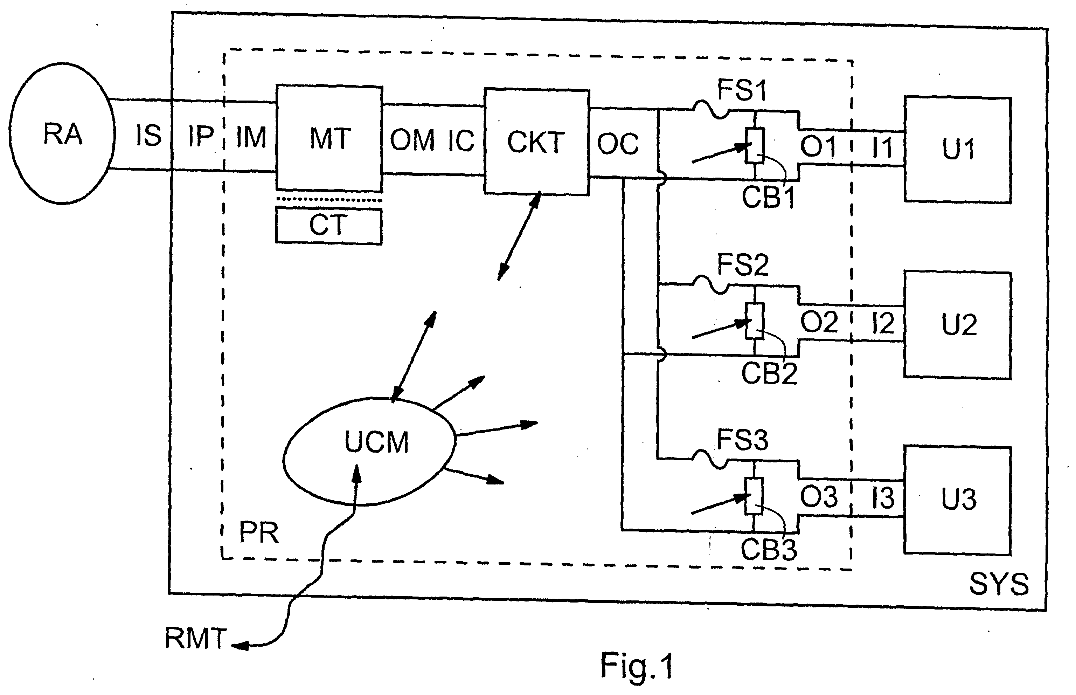

With reference to Fig.1, an electric system SYS, according to the present invention, is provided with at least an own supply input IS to be connected to external supply electrical mains RA and comprises :
- at least one user electric unit provided with at least an own supply input, and
- a protection system PR connected to the supply input IS of system SYS and to the supply input of the unit and adapted to distribute power internally to system SYS in an electrically protected way.

System SYS of Fig.1 comprises three units U1, U2, U3, each of them is provided with an own supply input I1, I2, 13.

The peculiarity of protection system PR, according to the present invention, mainly consists in a particular electric circuit CKT, according to the present invention, comprised in system PR.

Protection system PR is provided with a supply input IP and at least one supply output; in the example of Fig.1, system PR is provided with three supply outputs O1, O2, O3.

System PR, according to the present invention, essentially comprises:
- an automatic breaker device MT, for example a magneto-thermal breaker, having an input IM connected to input IP of system PR and an output OM,
and
- an electric circuit CKT, according to the present invention, having an input IC connected to output OM of breaker device MT, and an output OC connected to the output of system PR.

In the example of Fig.1, output OC is connected to all outputs O1, O2, O3 of system PR that are connected in parallel to each other.

It is important to notice that, in the example of Fig.1, the above mentioned connections are not direct connections but indirect connections because of the presence of further circuit elements FS1,FS2,FS3,CB1,CB2.CB3 that will be explained afterwards.

The supply current of system SYS that flows from mains RA towards system SYS depends on the consumption of units U1, U2, U3, not considering, for simplicity, the current consumption of device MT and of circuit CKT; in normal conditions, the supply current of system SYS is lower than the nominal current "In" of device MT; but there may be anomalous cases where this does not happen.

In Fig.5 there is shown the possible waveform of the supply current of system SYS in six different anomalous cases:
case A: current exceeds a little the nominal value "In" for a short time;
case B: current exceeds a little the nominal value "In" for a long time;
case C: current exceeds a lot the nominal value "In" for a short time;
case D: current exceeds a lot the nominal value "In" for a long time;
case E: current exceeds the nominal value "In" and continues to increase quickly;
case F: current exceeds the nominal value "In" and continues to increase slowly.

In the absence of any protection device and of circuit CKT, cases A and B would not have negative effects on system SYS, case C would have a negative effect on system SYS damaging it slightly, case D would have a negative effect on system SYS damaging it seriously, cases E and F would surely have a negative effect on system SYS and it would be damaged irreparably.

In the presence of an appropriate breaker device MT having, for example, the characteristic shown in Fig.4, it may be assumed that there is an intervention of device MT in cases D, E, F; in case C, because the current pulse is very short, the intervention of device MT is not sure. In conclusion, in cases A and B there is no intervention and this is desired, in cases E and F there is an intervention and this is desired, in case C there is no intervention but system SYS is not adequately protected, in case D there is an intervention but this is an exaggerated measure because the current transient would be limited in time.

The method according to the present invention improves the electric protection provided to an electric system by an automatic breaker device; such protection consists in performing a permanent (save manual or pseudo-manual restoration) interruption in the power supplied to the user units of the electric system when predetermined electric situations are reached.

With reference (not restrictively) to Fig.1 and Fig.6, the method according to the present invention comprises the steps of :
a) performing a monitoring of the power supplied to system SYS at least when the current supplied to system SYS is greater than a predetermined first value "In", and
b) performing a temporary interruption in the power supplied to the unit (U1, U2, U3) through an electric circuit (CKT), distinct from the automatic breaker device, starting before said electric situations are reached so that the intervention of the automatic breaker device is prevented;
wherein the temporary interruption is of a predetermined duration "Tb".

In this way, automatic breaker device MT does not intervene and, therefore, its (manual or pseudo-manual) restoration is not required.

Ideally, the temporary interruption should start just before the intervention of device MT, for example some milliseconds or even less; practical reasons advise to use safety margins because it is absolutely not easy to estimate with extreme precision the intervention instant of device MT; in practice, the start of every temporary interruption is determined on the basis of past history and, logically, not on the basis of future history; so it is not possible to precisely determine how in advance each interruption starts with respect to the corresponding intervention of device MT.

Naturally, the type of supply power monitoring to be performed (instant current, average current, rms current, peak current, instant voltage, average voltage, rms voltage, peak voltage, instant electric power, average electric power, peak electric power, ...) depends on the type of electric situations that lead to the intervention of the breaker device used.

For the sake of completeness, it has to be added that the intervention of the breaker device may be influenced by environment parameters such as: temperature, humidity, atmospheric pressure.

According to the type of breaker device, the monitoring may be more or less extended in time; in certain cases, the monitoring may be permanent; it is common practice to perform the monitoring by sampling.

After such temporary interruption, it is possible to provide simply for the further step of :
c) restoring power to user electric units U1, U2, U3.

More sophisticated but more complicated to implement strategies may provide for restoring supply power, for example, with a limited supply voltage value or with a supply current limitation.

After such restoration, the supply current of system SYS can become normal again or, in any case, falling within non-dangerous limits, as shown in Fig.6 with waveform H; actually, waveform H includes a slight exceeding of threshold "In" for a short time period.

Alternatively, after such restoration, there can happen again another anomaly in the supply current of system SYS, as shown in Fig.7. The method according to the present invention may then advantageously provide that steps a), b), c) be repeated for a predetermined number of times; in other words, a certain number of trials are performed in the hope that the problem be solved by itself; in the example of Fig.7, there are performed three temporary interruptions Tb1, Tb2, Tb3 and thereafter the current has become normal according to waveform N. In the case of repetitions, complex strategies may provide that the duration of the temporary interruption be different from trial to trial, for example, increasing or decreasing.

Notwithstanding the temporary interruption or the eventual repeated temporary interruptions, the supply current may anyway not return within non-dangerous limits, that is to say that such predetermined electric situations may anyway be reached again; in this case, the method may advantageously provide that a permanent interruption in the power supplied to user units U1, U2, U3 be performed.

The easiest way to obtain this is to leave the automatic breaker device MT to intervene. There may be also provided to facilitate the intervention of device MT through crow-bar devices, as will be better described hereafter.

Alternatively there may be provided that this permanent interruption be performed by the same device that has the task to perform the temporary interruption; in this case, it would seem that device MT has no longer utility: this is not true; in fact, its presence may be on one hand required by safety standards and on the other hand recommended as further protection in case of non-action of the normal safety means.

By what described till now, it is possible to avoid undesired interventions of the automatic breaker device while guaranteeing electric protection to the electric system.

There are cases anyway, as the one indicated with letter C in Fig.5, in which automatic breaker device MT may not be able to intervene even if system SYS may run the risk of being damaged to a more or less serious degree.

A very frequent situation is that a very high supply current peak may damage system SYS: in the example of Fig.5, higher than a certain value "Im".

To face this case, the method according to the present invention may advantageously provide that the supply. current of system SYS be limited to a predetermined value during the operation of the system; in the case of Fig.5 such value is "Im".

The waveform of the supply current shown in Fig.7 corresponds to a case in which both a current limitation and a temporary interruption repetition have been performed, in particular a triple repetition: during a first section K of the waveform limiting the current for a relatively long time interval has been necessary, during a second section L of the waveform limiting the current for a shorter time interval has been necessary, during a third section M of the waveform no limitation has been necessary to be performed. It has to be noticed that it would be a good thing to limit as much as possible the time intervals during which a forced limitation of the supply current is performed because this leads to a corresponding limitation of the supply voltage and therefore to an anomalous power supplying to the user units.

A basic parameter of the method according to the present invention is the current value above which it is necessary to monitor the power supplied to the system; the most natural choice is that this value corresponds substantially to the value of the nominal current of automatic breaker device MT. It is also possible to make more conservative choices, for example: 50% or 80% of the nominal value.

Another basic element of the method according to the present invention is the electric situations that cause intervention of automatic breaker device MT and that must be prevented; in the simplest case, but perhaps the most realistic, these depend on the characteristics of device MT itself: in many practical cases, such electric situations are functions at least of the intensity and the duration of the current flowing through the device; naturally, it is possible to think of breakers with programmable intervention. As already said, it is necessary to keep in mind that the breaker device intervention may be influenced also by environment parameters such as: temperature, humidity, atmospheric pressure.

An important parameter of the method according to the present invention is the duration "Tb" of the temporary interruption or interruptions; a good compromise choice is that such duration be in the order of the second; in any case, the choice should be made case by case on the basis of the frequency, the duration and the entity of the various anomalies in the power supplying that may happen and also on the basis of the down time acceptable for system SYS; similar considerations are valid also for the number of interruption repetitions.

Another important parameter of the method according to the present invention is the current limitation value; this choice depends on the characteristics of the automatic breaker device; for sure, the current limitation value will be a multiple (not necessarily an integer) of the nominal current of automatic breaker device MT; the value of the current limitation shall be chosen in such a way as to assure a reliable response by device MT; in the case of the device corresponding to the characteristic of Fig.4, a reasonable choice is, for example, between five and eight times the nominal current. It has to be noticed that it would be a good thing to limit, as much as possible, the time during which a supply current limitation is performed because this leads to a corresponding reduction in the supply voltage and therefore, during the limitation time, the user units of the electric system are power supplied in an anomalous way (out of their constructive specifications).

In the method according to the present invention it is necessary to take a basic decision: when to start the power supply temporary interruption. This implies to estimate when the electric situations that lead to the intervention of the automatic breaker device are next to be reached.

A good implementation of the method must provide for a conservative estimate; that is to say, the estimate must be made in such a way that it would be really unlikely that the breaker intervenes before the start of the temporary interruption.

A good implementation of the method must also imply an estimate relatively simple to be made in terms of computation.

A very good implementation of the method should make an estimate that takes into account also environment situations important for the specific breaker device used; such an estimate implies the detection also of these environment parameters.

If a physical-mathematical accurate model of the breaker device would be available, the mentioned estimate could be made in a very precise way; unfortunately this happens very seldom.

A first good compromise implementation consists in that the start time of said temporary interruption of step b) corresponds to the time when a certain predetermined value is exceeded by the time integral of the difference between the current supplied to the system obtained through the monitoring of step a), and the nominal current of the automatic breaker device, the integral being computed starting from the time when the current supplied to the system exceeds such nominal value; with reference to Fig.6, such integral corresponds to the area delimited on the upper side by waveform section G and on the lower side by horizontal straight line «In».

The mentioned value must be determined typically at least on the basis of the automatic breaker device characteristic. In the following there will described some possible good choices making reference to Fig.4 and Fig.6.

A first very conservative choice consists in determining the peak value of the current within section G, using such peak value to estimate the corresponding minimum intervention time using the lower curve in Fig.4 and thereafter making the product of them; if, for example, during an operation phase of the electric system the peak within waveform G is 75 Ampere, i.e. three times the nominal current of device MT, the corresponding minimum intervention time is about 0,2 seconds, and the mentioned value will be equal to (75-25)*0,2=10; in this case, the mentioned "predetermined value" depends not only on the characteristic of the device but also on the course of the current in the system and therefore it has to be updated instant by instant.

A second choice similar to the first one but less conservative consists in considering the average value of the current within section G instead of the peak value; also in this case, the mentioned "predetermined value" depends not only on the characteristic of the device but also on the course of the current in the system and therefore it has to be updated instant by instant.

A second good compromise implementation consists in that the start time of said temporary interruption of step b) corresponds to the time when a certain predetermined value is exceeded by the time integral of the difference squared between the current supplied to the system obtained through the monitoring of step a), and the nominal current of the automatic breaker device, the integral being computed starting from the time when the current supplied to the system exceeds such nominal value.

The mentioned value of the second implementation can be determined with methodologies and considerations similar to the value of the first implementation.

For sure, further good compromise implementations based on different simplified models of the breaker device, may be provided.

The method according to the present invention requires circuitries and electric and electronic systems in order to be implemented; these constitute further aspects of the present invention. It is better to clarify that during the implementation phase of the method according to the present invention it is advisable to consider appropriate safety margins in the parameter choice, in the measurement estimate, and in the use of the device characteristics.

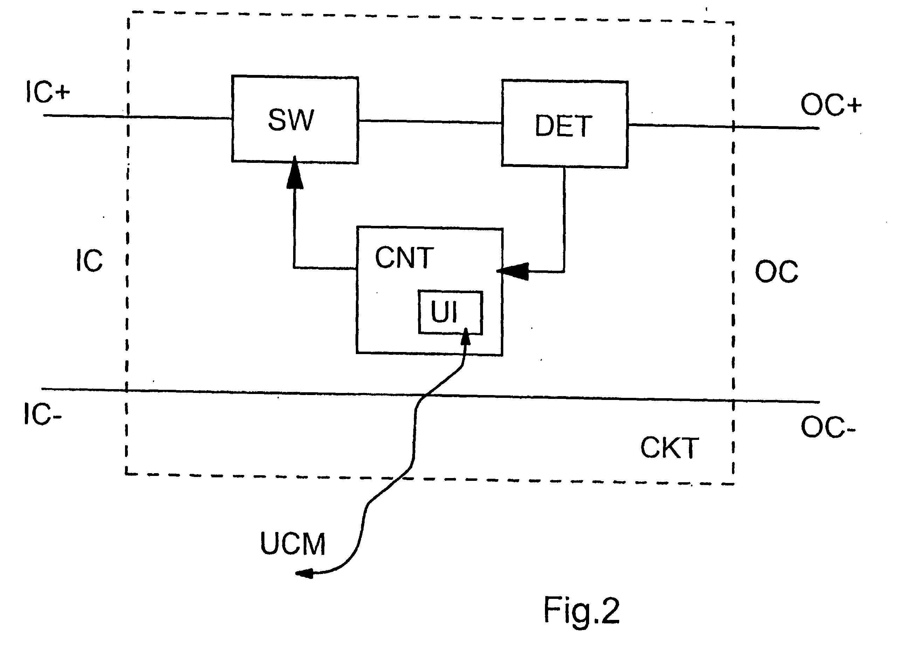

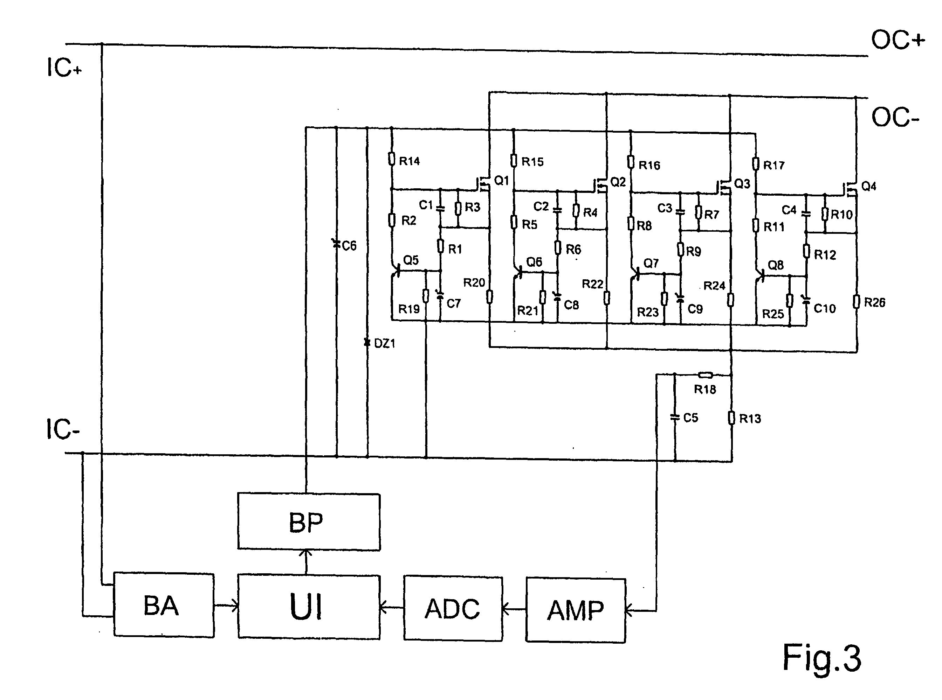

With reference (not restrictively) to Fig.2 and Fig.3, electric circuit CKT, according to the present invention, is provided with a supply input IC and a supply output OC; input IC is adapted to be connected to an output OM of an automatic breaker device MT; output OC is adapted to be connected to a supply input of a user electric unit (in the example of Fig.2, output OC is connected in parallel to all the supply inputs I1,I2,I3 of the three user units U1,U2,U3 of electric system SYS); circuit CKT is adapted to carry out the method according to the present invention and, to this purpose, it comprises :
- detection means DET for detecting at least the current flowing at supply output OC of electric circuit CKT,
- conduction means SW for connecting in a controlled way supply input IC and supply output OC of electric circuit CKT, and
- control means CNT connected to detection means DET and to conduction means SW, and adapted to control said conduction means SW in relation to at least the current detected by detection means DET.

It is clear that the implementation of the method is mainly entrusted to control means CNT, while conduction means SW will have the task to perform the temporary interruption and the restoration of the power.

In the example of Fig.2, supply input IC is provided with an own positive terminal IC+ and an own negative terminal IC- and supply output OC is provided with an own positive terminal OC+ and an own negative terminal OC-, conduction means SW operate only on the positive line while the negative line is constituted by a permanent direct connection at very low resistance, detection means DET operate only on the positive line.

Examples of implementation different from the one of Fig.2 may provide that the conduction means operate both on the positive line and on the negative line, or, in systems with alternating current supply, on one or on both lines or on the ground, or, in three phase systems, on all phase lines and on the common line. Examples of implementation different from the one of Fig.2, may provide that the detection means operate on the negative line, or, in systems with alternating current supply, on one of the lines or on the ground, or, in three phase systems, on one of the phase line or on the common line; moreover, the detection means may be adapted to detect current in more than one conductor at the same time or in temporal sequence.

Current detection can be made, in case of direct current supply, through a resistive shunt or a Hall-effect sensor, or, in case of alternating current supply, through an ammeter transformer or a compensated coil/choke.

The electric circuit according to the present invention may provide that the detection means be further adapted to detect other supply quantities at supply output OC of the electric circuit, for example, supply voltage at output OC; in this case, the control means are adapted to control the conduction means further in relation to these other detected supply quantities.

According to their simplest embodiment, conduction means SW consists of an ON/OFF controlled switch as, for example, a relay; if it is necessary to operate on more lines, the number of controlled switches in consequence increases.

In order to obtain a more accurate conduction control, it is necessary that conduction means SW comprises at least a conduction path having a resistance of a controlled value for connecting input IC to output OC.

In order to obtain the advantageous effect of supply current limitation, it is advantageous to use conduction means SW with controlled resistance conduction path and control means CNT able to control them in such a way as to limit the current flowing between input IC and output OC.

Means SW can be easily realised, for example, through one or more transistors; in case of alternating current supply, it is possible to use two transistors connected in such a way that their main conduction paths be opposed.

As the method according to the present invention provides for complicated computation, it is advantageous that the said control means CNT comprises essentially a programmed and/or programmable type intelligent unit UI. Such unit UI may comprise a microprocessor and some memory or, alternatively, a microcontroller.

In case that circuit CKT is provided with an intelligent unit UI, this last may control means SW and may also enable the remote control and/or monitor of circuit CKT. Examples of control may be the programming of unit UI itself in terms of method parameters; monitor may refer to both supply quantities and performed interruptions history.

In the example Fig.2 and Fig.3, unit UI exchanges information with a remote control and monitor unit UCM internal to electric system SYS; it is then the task of unit UCM to exchange management information with a remote manager RMT where e.g. a human operator acts.

In Fig.3 it is shown a mixed block and schematic electric diagram of a particular embodiment of the electric circuit according to the present invention: four MOSFET type transistors Q1, Q2, Q3, Q4 connected in parallel to each other constitute essentially conduction means SW; the network comprising resistors R13, R18 and capacitor C5 constitutes essentially detection means DET; each MOSFET type transistor is connected to a self-protection circuitry with appropriate filters (transistor Q1 is connected to transistor Q5, to resistors R1, R2, R3, R14 and to capacitors C1, C7); control means CNT consists of an amplifier AMP directly connected to the current detection network, an analog-to-digital converter ADC connected to the output of amplifier AMP, an intelligent unit UI connected to the output of converter ADC, a power supply block BA connected to input IC and to unit UI for providing supply power to it, and a driving block BP connected to an output of unit UI and to the control terminals of transistors Q1,Q2,Q3,Q4.

An electric circuit CKT according to the present invention may be used and applied into a protection system.

With reference (not restrictively) to Fig.1, protection system PR, according to the present invention, is provided with a supply input IP and at least one supply output; in the example of Fig.1, system PR is provided with three supply outputs O1,O2,O3, one for each of the user units U1,U2,U3 of electric system SYS.

System PR comprises :
- an automatic breaker device MT having an input IM connected to input IP of system PR and an output OM,
and
- an electric circuit CKT according to the present invention having an input IC connected to output OM of device MT, and an output OC connected to the output of system PR;

in the example of Fig.1, output OC of device MT is connected in parallel to all the three outputs O1, O2, O3 of system PR.

Actually, it is very likely and advantageous that system PR be provided with more supply outputs, all connected in parallel to the output of circuit CKT.

In case of a plurality of outputs, in protection system PR each output O1, O2, O3 may advantageously be provided with an own local electric protection device FS1, FS2, FS3; local protection electric devices FS1, FS2, FS3 are advantageously co-ordinated, to the possible extent, with device MT. The purpose of all this is that local protection devices FS1, FS2, FS3 intervene in case of failures or anomalies and that they do this before general protection device MT; in any case, before any of these interventions it would be good that electric circuit CKT according to the present invention acts in order to avoid undesired interventions.

In addition to local protection devices FS1, FS2, FS3 it is advantageous to provide an own controlled local crow-bar device CB1, CB2, CB3 for each of outputs O1, O2, O3 of system PR, that is able to cause the intervention of the corresponding local electric protection device FS1, FS2, FS3; in practice, if through an appropriate detection of the supply quantities, it is possible to determine that one of the user units connected to the outputs of protection system PR is irreparably faulty and out of order, it is possible to control the closing of the corresponding crow-bar device and to obtain the intervention of the corresponding local protection device or (if it is necessary) of the general electric protection device; such failure or bad operation may then be signalled to the remote and/or local operator.

In order to improve the performances of protection system PR, it is possible to advantageously provide further a thermal compensation device CT for the characteristics of the breaker device MT.

.Finally, protection system PR according to the present invention may advantageously comprises a remote control and/or monitor unit UCM; the control may refer, for example, to circuit CKT and to crow-bar devices CB1, CB2, CB3; monitor may refer to the various supply quantities and to protection system PR history and status.

A protection system according to the present invention may be used and applied e.g. into a power supply system for electronic equipments.

A protection system according to the present invention may be used and applied into electric systems.

With reference (not restrictively) to Fig.1, electric system SYS according to the present invention is provided with at least an own supply input IS to be connected to external supply electrical mains RA and comprises :
- at least one user electric unit provided with at least an own supply input, and
- a protection system PR according to the present invention, connected to supply input IS of system SYS and to the supply input of the or each unit and adapted to distribute power internally to system SYS in an electrically protected way;

in the example of Fig.1, user electric units U1, U2, U3 are three.

The circuitries and the systems described above require calibration: method parameters have to be set on the basis of the user units, of the automatic breaker device i.e. of the general protection device and of the eventual local protection devices and also of the type and frequency of the failures and of the disturbances.

Such calibration may be made manually by the installer or the user; alternatively, such calibration may be made in an automatic or pseudo-automatic way.

In case of an intelligent unit UI, it is possible to perform a sort of self-learning.

The self-learning operation consists in detecting all characteristic parameters of automatic breaker MT through a test on itself instead of setting them on the basis of its characteristics provided by the manufacturer.

Such operation must be performed during the installation phase and when loads are not applied, i.e. when user units are not connected; an operator must be present in order to restore/reset the breaker; the overall duration of such operation must be of the order of the minute.

The self-learning operation can be summarised as follows:
- downstream of breaker MT only an appropriate test equipment is connected;
- the breaker is restored/reset manually by the operator;
- the self-learning procedure is started on the test equipment;
- the test equipment automatically applies at the breaker output loads in such a way as to cause flowing currents with a step-by-step increasing width and duration;
- in those cases when there happens an intervention of the breaker, the quantities are memorised that led to the intervention and it is required through an appropriate signalling to restore/reset the breaker;
- when the test is complete all data memorised during the preceding step are transferred in an appropriate way to unit UI of circuit CKT according to the present invention through a serial connection or of another type.

In other words, the self-learning operation builds up point by point the intervention curve of the breaker under test. It is important to keep in mind that such curve has been derived in particular conditions (for example of temperature, of humidity) and may be extremely appropriate to apply safety margins; this may be done by the test equipment or by intelligent unit UI.

Once the self-learning operation is over, unit UI and the corresponding circuit CKT can be used; obviously, what is left is to connect the user units to circuit CKT and then to supply power to breaker MT.

## Claims

1. Method for improving the electric protection of an electric system (SYS) provided with at least an own supply input (IS) connected to external supply electric mains (RA) and comprising
- at least one user electric unit (U1, U2, U3) provided with at least an own supply input (I1,I2,I3), and
- at least one automatic breaker device (MT) connected between the supply input (IS) of the system (SYS) and the supply input (I1, I2, I3) of the unit (U1, U2, U3), and adapted to perform a permanent interruption in the power supplied to the unit (U1, U2, U3) for protection of the system (SYS) when predetermined electric situations in the power supplied to the system (SYS) are reached,
the method comprising the steps of :
a) performing a monitoring of the power supplied to the system (SYS) at least when the current supplied to the system (SYS) is greater than a predetermined first value (In), and
b) performing a temporary interruption in the power supplied to the unit (U1, U2, U3) through an electric circuit (CKT), distinct from the automatic breaker device, starting before said electric situations are reached so that the intervention of the automatic breaker device is prevented;
wherein said temporary interruption is of a predetermined duration (Tb).

2. Method according to the claim 1, **characterised by** the further step of :
c) restoring supply power to the unit (U1,U2,U3) after said temporary interruption.

3. Method according to claim 2, wherein said steps a), b), c) are repeated for a predetermined number of times.

4. Method according to claim 2 or 3, wherein after the or the last step c), in the case that said electric situations are reached, a permanent interruption in the power supplied to the unit (U1, U2, U3) is performed.

5. Method according to any of the preceding claims, wherein the current supplied to the system (SYS) is limited to a second predetermined value (Im) during the operation of the system (SYS).

6. Method according to claim 5, wherein said second current value (Im) corresponds to a multiple of the current nominal value (In) of the automatic breaker device (MT).

7. Method according to any of the preceding claims, wherein said first current value (In) substantially corresponds to the nominal current value of the automatic breaker device (MT).

8. Method according to any of the preceding claims, wherein said electric situations depend on the characteristics of the automatic breaker device (MT).

9. Method according to any of the preceding claims, wherein said electric situations are a function at least of intensity and duration of the current flowing through the automatic breaker device (MT).

10. Method according to any of the preceding claims, wherein said duration (Tb) is of the order of magnitude of the second.

11. Method according to any of the claims from 1 to 10, wherein the start time of said temporary interruption of step b) corresponds to the time when a predetermined third value is exceeded by the time integral of the difference between the current supplied to the system (SYS) obtained through the monitoring of step a) and the nominal current (In) of the automatic breaker device (MT), the integral being computed starting from the time when the current supplied to the system (SYS) exceeds said nominal value (In).

12. Method according to any of the claims from 1 to 10, wherein the start time of said temporary interruption of step b) corresponds to the time when a predetermined third value is exceeded by the time integral of the difference squared between the current supplied to the system (SYS) obtained through the monitoring of step a) and the nominal current (In) of the automatic breaker device (MT), the integral being computed starting from the time when the current supplied to the system (SYS) exceeds said nominal value (In).

13. Electric circuit (CKT) provided with a supply input (IC) and a supply output (OC), said input (IC) being adapted to be connected to an output (OM) of an automatic breaker device (MT), said output (OC) being adapted to be connected to a supply input (I1, I2, I3) of a user electric unit (U1, U2, U3), the circuit (CKT) being adapted to carry out the method according to any of the claims from 1 to 12 and comprising :
- detection means (DET) for detecting at least the current flowing at the supply output (OC) of the electric circuit (CKT),
- conduction means (SW) for connecting in a controlled way the supply input (IC) and the supply output (OC) of the electric circuit (CKT), and
- control means (CNT) connected to said detection means (DET) and to said conduction means (SW), and adapted to control said conduction means (SW) in relation to at least the current detected by said detection means (DET).

14. Circuit (CKT) according to claim 13, wherein said detection means (DET) are further adapted to detect other supply quantities at the supply output (OC) of the electric circuit, and wherein said control means (CNT) are adapted to control said conduction means (SW) in relation further to said other supply quantities.

15. Circuit (CKT) according to claim 13 or 14, wherein said controlled conduction means (SW) are adapted to connect said input (IC) and said output (OC) through at least a conduction path having a resistance of a controlled value.

16. Circuit (CKT) according to claim 13 or 14 or 15, wherein said control means (CNT) are adapted to control said conduction means (SW) in such a way as to limit the current flowing between said input (IC) and said output (OC).

17. Circuit (CKT) according to any of the claims from 13 to 16, wherein said conduction means (SW) essentially comprises at least one transistor (Q1,Q2,Q3,Q4).

18. Circuit (CKT) according to any of the claims from 13 to 17, wherein said control means (CNT) essentially comprises a programmed and/or programmable type intelligent unit (UI).

19. Circuit (CKT) according to claim 18, wherein said intelligent unit (UI) is adapted to enable the remote control and/or monitor of the circuit (CKT).

20. Protection system (PR) provided with a supply input (IP) and at least one supply output (O1,O2,O3), comprising :
- an automatic breaker device (MT) having an input (IM) connected to the input (IP) of the system (PR) and an output (OM),
and
- an electric circuit (CKT) according to any of the claims from 13 to 19, having an input (IC) connected to the output (OM) of the breaker device (MT), and an output (OC) connected to the output (O1,O2,O3) of the system (PR).

21. Protection system (PR) according to claim 20, wherein said system (PR) is provided with a plurality of supply outputs (O1,O2,O3), and wherein said outputs (O1,O2,O3) of the system (PR) are connected in parallel between them and to the output (OC) of said circuit (CKT).

22. Protection system (PR) according to claim 21, wherein each output (O1,O2,O3) of the system (PR) is provided with an own local electric protection device (FS1,FS2,FS3), said local electric protection devices (FS1,FS2,FS3) being co-ordinated with said automatic breaker device (MT).

23. Protection system (PR) according to claim 22, wherein each output (O1,O2,O3) of the system (PR) is provided with an own controlled local crow-bar device (CB1, CB2, CB3) that is able to cause the intervention of the corresponding local electric protection devices (FS1,FS2,FS3).

24. Protection system (PR) according to any of the claims from 20 to 23, comprising further a device (CT) for thermal compensation of the characteristic of the breaker device (MT).

25. Protection system (PR) according to any of the claims from 20 to 24, comprising a remote control and/or remote monitoring unit (UCM).

26. Power supply system comprising a protection system according to any of the claims from 20 to 25.

27. Electric system (SYS) provided with at least an own supply input (IS) to be connected to external supply electrical mains (RA) and comprising :
- at least one user electric unit (U1, U2, U3) provided with at least an own supply input (I1, I2, I3), and
- a protection system (PR) according to any of the claims from 20 to 25, connected to the supply input (IS) of the system (SYS) and to the supply input (I1, I2, I3) of the or each unit (U1, U2, U3) and adapted to distribute power internally to the system (SYS) in an electrically protected way.

## Patentansprüche

1. Verfahren zur Verbesserung des elektrischen Schutzes einer elektrischen Anlage (SYS) versehen mit mindestens einem eigenen Versorgungseingang (IS), der mit externen Spannungsversorgungsnetzen (RA) verbunden ist und aufweisend:
- mindestens ein Anwender Elektrogerät (U1, U2, U3), das mit mindestens einem eigenen Versorgungseingang (I1, I2, I3) versehen ist, und
- mindestens eine automatische Unterbrechereinrichtung (MT), die zwischen den Versorgungseingang (IS) der Anlage (SYS) und dem Versorgungseingang (I1, 12, 13) des Geräts (U1, U2, U3) geschaltet ist, und geeignet ist, um eine permanente Unterbrechung der Stromversorgung, welcher das Gerät (U1, U2, U3) versorgt, zum Schutz der Anlage (SYS) auszuführen, wenn vorbestimmte elektrische Zustände in der Stromversorgung, welcher die Anlage (SYS) versorgt, erreicht sind,
wobei das Verfahren aufweist die Schritte aus:
a) Durchführen eine Überwachung der Stromversorgung, welcher die Anlage (SYS) versorgt, zumindest wenn der Strom, welcher die Anlage (SYS) versorgt, größer als ein vorbestimmter Wert (In) ist, und
b) Ausführen einer temporären Unterbrechung in der Stromversorgung, welche das Gerät (U1, U2, U3) durch einen vom automatischen Unterbrechereinrichtung unterschiedlichen elektrischen Stromkreis (CKT) versorgt, beginnend bevor die elektrischen Zustände erreicht sind, so dass das Eingreifen der automatischen Unterbrechereinrichtung verhindert wird,
wobei die temporären Unterbrechung von einer vorbestimmten Dauer (Tb) ist.

2. Verfahren gemäß Anspruch 1 charakterisiert durch den weiteren Schritt aus:
c) nach der temporären Unterbrechung Stromversorgung zum Gerät (U1, U2, U3) wiederherstellen.

3. Verfahren gemäß Anspruch 2, wobei die Schritte a), b), c) eine vorbestimmte Anzahl von Malen wiederholt werden.

4. Verfahren gemäß Anspruch 2 oder 3, wobei nachdem der oder die letzten Schritte c), im Fall das die elektrischen Zustände erreicht sind, eine permanente Unterbrechung in der Stromversorgung, die das Gerät (U1, U2, U3) versorgt, ausgeführt wird.

5. Verfahren gemäß einem der vorhergehenden Ansprüche, wobei der Strom, welcher die Anlage (SYS) versorgt, während des Betriebs der Anlage (SYS) auf einen zweiten vorbestimmten Wert (Im) begrenzt wird.

6. Verfahren gemäß Anspruch 5, wobei der zweite Stromwert (Im) einem Vielfachen des Stromnennwerts (In) der automatische Unterbrechereinrichtung (MT) entspricht.

7. Verfahren gemäß einem der vorhergehenden Ansprüche, wobei der erste Stromwert (In) dem Stromnennwerts der automatische Unterbrechereinrichtung (MT) im wesentlichen entspricht.

8. Verfahren gemäß einem der vorhergehenden Ansprüche, wobei die elektrischen Zustände von den Kennlinien der automatische Unterbrechereinrichtung (MT) abhängen.

9. Verfahren gemäß einem der vorhergehenden Ansprüche, wobei die elektrischen Zustände Funktionen aus zumindest Intensität und Dauer des Stromes sind, der durch die automatische Unterbrechereinrichtung (MT) fließt.

10. Verfahren gemäß einem der vorhergehenden Ansprüche, wobei die Dauer (Tb) die Größenordnung der zweiten hat.

11. Verfahren gemäß einem der vorhergehenden Ansprüche 1 bis 10, wobei die Anlaufzeit der temporärem Unterbrechung aus Schritt b) der Zeit entspricht, zu der ein vorbestimmter dritter Wert durch das Zeitintegral über der Differenz zwischen dem Strom, mit dem die Anlage (SYS) versorgt wird, erhalten durch die Überwachung aus Schritt a), und dem Normstrom (In) der automatische Unterbrechereinrichtung (MT), wobei das Integral berechnet wird beginnend mit der Zeit, zu welcher der Strom, mit dem die Anlage (SYS) versorgt wird, den Nennwert (In) überschreitet.

12. Verfahren gemäß einem der vorhergehenden Ansprüche 1 bis 10, wobei die Anlaufzeit der temporären Unterbrechung aus Schritt b) der Zeit entspricht, zu der ein vorbestimmen dritter Wert durch das Zeitintegral über der quadrierten Differenz zwischen dem Strom, mit dem die Anlage (SYS) versorgt wird, erhalten durch die Überwachung aus Schritt a), und dem Normstrom (In) der automatische Unterbrechereinrichtung (MT), wobei das Integral berechnet wird beginnend mit der Zeit, zu welcher der Strom, mit dem die Anlage (SYS) versorgt wird, den Nennwert (In) überschreitet.

13. Elektrischer Stromkreis (CKT) versehen mit einem Versorgungseingang (IC) und einem Versorgungsausgang (OC), wobei der Eingang (IC) geeignet ist mit einem Ausgang (OM) einer automatischen Unterbrechereinrichtung (MT) des Ausgangs (OC) verbunden zu werden, wobei der Ausgang (OC) geeignet ist mit einer Versorgungseingang (I1, I2, I3) eines Geräts (U1, U2, U3) eines Benutzers verbunden zu werden, wobei der Schaltkreis (CKT) geeignet ist das Verfahren gemäß einem der Ansprüche 1 bis 12 auszuführen und aufweist:
- Detektionsmittel (DET) zur Detektion zumindest des Stroms, der am Versorgungsausgang (OC) des Stromkreises (CKT) fließt,
- Leitmittel (SW) zum Verbinden des Versorgungseingangs (IC) und des Versorgungsausgangs (OC) des Stromkreises (CKT) auf eine kontrollierte Weise, und
- Kontrollmittel (CNT) verbundene mit den Detektionsmittel (DET) und den Leitmittel (SW) und geeignet, um die Leitmittel (SW) in Bezug auf zumindest den durch die Detektionsmittel (DET) detektierten Strom zu kontrollieren.

14. Schaltkreis (CKT) gemäß Anspruch 13, wobei die Detektionsmittel (DET) weiterhin geeignet sind, um andere Versorgungsquantitäten am Versorgungsausgang (OC) des Stromkreises zu detektieren, und wobei die Kontrollmittel (CNT) geeignet sind, um die Leitmittel (SW) in weiterem Bezug auf die andere Versorgungsquantitäten zu kontrollieren.

15. Schaltkreis (CKT) gemäß Anspruch 13 oder 14, wobei die kontrollierten Leitmittel (SW) geeignet sind, um den Eingang (IC) und den Ausgang (OC) durch mindestens einen Leitungsweg zu verbinden, der einen Widerstand eines kontrollierten Werts hat.

16. Schaltkreis (CKT) gemäß Anspruch 13 oder 14 oder 15, wobei die Kontrollmittel (CNT) geeignet sind, um die Leitmittel (SW) so zu kontrollieren, dass der Strom, der zwischen dem Eingang (IC) und dem Ausgang (OC) fließt, begrenzt wird.

17. Schaltkreis (CKT) gemäß einem der Ansprüche 13 bis 16, wobei das Leitmittel (SW) im wesentlichen mindestens einen Transistor (Q1, Q2, Q3, Q4) aufweist.

18. Schaltkreis (CKT) gemäß einem der Ansprüche 13 bis 17, wobei die Kontrollmittel (CNT) im wesentlichen eine programmierte und/oder vom programmierbaren Typ intelligente Einrichtung (UI) aufweist.

19. Schaltkreis (CKT) gemäß Anspruch 18, wobei die intelligente Einrichtung (UI) geeignet ist, um die Fernsteuerung und/oder den Monitor des Schaltkreis (CKT) freizugeben.

20. Schutzsystem (PR), versehen mit einen Versorgungseingang (IP) und mindestens einem Versorgungsausgang (O1, O2, O3) aufweisend:
- ein automatische Unterbrechereinrichtung (MT), die einen Eingang (IM), der mit dem Eingang (IP) des Systems (PR) verbunden ist, und einen Ausgang (OM) hat,
und
- ein Stromkreis (CKT) gemäß einem der Ansprüche 13 bis 19, die einen Eingang (IC), der mit dem Ausgang (OM) der automatische Unterbrechereinrichtung (MT) verbunden ist, und einer Ausgang (OC), der mit der Ausgabe (O1,O2,O3) des Systems (PR) verbunden ist, hat.

21. Schutzsystem (PR) gemäß Anspruch 20, wobei das System (PR) mit einer Mehrzahl von Versorgungsausgaben (O1, O2, O3) versehen ist, und wobei die Ausgaben (O1, O2, O3) des Systems (PR) parallele zwischen diesen und mit dem Ausgang (OC) des Schaltkreis (CKT) verbunden sind.

22. Schutzsystem (PR) gemäß Anspruch 21 wobei jeder Ausgang (O1, 02, 03) des Systems (PR) mit einem eigenen lokalen elektrischen Schutzeinrichtung (FS1, FS2, FS3) versehen ist, wobei die elektrischen Schutzeinrichtung (FS1, FS2, FS3) auf die automatische Unterbrechereinrichtung (MT) abgestimmt sind.

23. Schutzsystem (PR) gemäß Anspruch 22, wobei jeder Ausgang (01, 02, 03) des Systems (PR) mit einem eigenen lokalen Überspannungsschutzeinrichtung (CB1, CB2, CB3) versehen ist, die in der Lage ist den Eingriff der entsprechenden lokalen elektrischen Schutzeinrichtung (FS1, FS2, FS3) zu bewirken.

24. Schutzsystem (PR) gemäß einem der Ansprüche 20 bis 23, die eine weitere Einrichtung (CT) zur thermischen Kompensation der Kennlinien der Unterbrechereinrichtung (MT) aufweisen.

25. Schutzsystem (PR) gemäß einem der Ansprüche 20 bis 24, die eine Fernsteuerung und/oder entfernte Überwachungseinrichtung (UCM) aufweisen.

26. Stromversorgungssystem, das ein Schutzsystem nach einem der Ansprüche 20 bis 25 aufweist.

27. Elektrische Anlage (SYS) versehen mit mindestens einem eigenen Versorgungseingang (IS), der mit einer Spannungsversorgungsnetzen (RA) zu verbinden ist, und aufweist:
- mindestens ein Anwender Elektrogerät (U1, U2, U3), das mit mindestens einem eigenen Versorgungseingang (I1, I2, I3) versehen ist, und
- ein Schutzsystem (PR) gemäß einem der Ansprüche 20 bis 25, das mit dem Versorgungseingang (IS) der Anlage (SYS) und mit dem Versorgungseingang (I1, I2, I3) des oder jedes Gerätes (U1, U2, U3) verbunden ist und geeignet ist, Netzversorgung intern an die Anlage (SYS) auf eine elektrisch geschützte Weise zu verteilen.

## Revendications

1. Procédé pour améliorer la protection électrique d'un système électrique (SYS) équipé d'au moins une entrée d'alimentation propre (IS) connectée à un réseau électrique d'alimentation extérieur (RA) et comprenant :
au moins une unité électrique consommatrice (U1, U2, U3) munie d'au moins une entrée d'alimentation propre (I1, I2, I3), et
au moins un dispositif interrupteur automatique (MT) connecté entre l'entrée d'alimentation (IS) du système (SYS) et l'entrée d'alimentation (I1, 12, 13) de l'unité (U1, U2, U3) et adapté pour exécuter une interruption permanente de l'énergie fournie à l'unité (U1, U2, U3) pour la protection du système (SYS) lorsque des situations électriques prédéterminées sont atteintes dans l'énergie fournie au système (SYS),
le procédé comprenant les étapes consistant à :
exécuter une surveillance de l'énergie fournie au système (SYS) au moins lorsque le courant fourni au système (SYS) est plus grand qu'une première valeur prédéterminée (In), et
exécuter une interruption temporaire de l'énergie fournie à l'unité (U1, U2, U3) à travers un circuit électrique (CKT) distinct du dispositif interrupteur automatique, en commençant avant que lesdites situations électriques soient atteintes, de manière que l'intervention du dispositif interrupteur automatique soit empêchée.
dans lequel ladite interruption temporaire est d'une durée prédéterminée (Tb).

2. Procédé selon la revendication 1, **caractérisé par** l'étape additionnelle consistant à :
rétablir l'énergie d'alimentation sur l'unité (U1, U2, U3) après ladite interruption temporaire.

3. Procédé selon la revendication 2, dans lequel lesdites étapes a), b), c) sont répétées un nombre de fois prédéterminé.

4. Procédé selon la revendication 2 ou 3, dans lequel après l'étape c) ou la dernière étape c), dans le cas où lesdites situations électriques sont atteintes, il s'effectue une interruption permanente de l'énergie fournie à l'unité (U1, U2, U3).

5. Procédé selon une quelconque des revendications précédentes, dans lequel le courant fourni au système (SYS) est limitée à une deuxième valeur prédéterminée (Im) pendant le fonctionnement du système (SYS).

6. Procédé selon la revendication 5, dans lequel ladite deuxième valeur de courant (Im) correspond à un multiple de la valeur nominale de courant (In) du dispositif interrupteur automatique (MT).

7. Procédé selon une quelconque des revendications précédentes, dans lequel ladite première valeur de courant (In) correspond sensiblement à la valeur nominale du courant du dispositif interrupteur automatique (MT).

8. Procédé selon une quelconque des revendications précédentes, dans lequel lesdites situations électriques dépendent des caractéristiques du dispositif interrupteur automatique (MT).

9. Procédé selon une quelconque des revendications précédentes, dans lequel lesdites situations électriques sont fonction d'au moins l'intensité et la durée du courant qui traverse le dispositif à interrupteur automatique (MT).

10. Procédé selon une quelconque des revendications précédentes, dans lequel ladite durée (Tb) est de l'ordre de grandeur de la seconde.

11. Procédé selon l'une quelconque des revendications 1 à 10, dans lequel le temps de démarrage de ladite interruption temporaire de l'étape b) correspond au temps où une troisième valeur prédéterminée est dépassée par l'intégrale dans le temps de la différence entre le courant fourni au système (SYS) obtenu par la surveillance de l'étape a) et le courant nominal (In) du dispositif interrupteur automatique (MT), l'intégrale étant calculée en partant du temps où le courant fourni au système (SYS) dépasse ladite valeur nominale (In).

12. Procédé selon l'une quelconque des revendications 1 à 10, dans lequel le temps de démarrage de ladite interruption temporaire de l'étape b) correspond au temps où une troisième valeur prédéterminée est dépassée par l'intégrale dans le temps du carré de la différence entre le courant fourni au système (SYS) obtenu par la surveillance de l'étape a) et le courant nominal (In) du dispositif interrupteur automatique (MT), l'intégrale étant calculée en partant du temps où le courant fourni au système (SYS) dépasse la valeur nominale (In).

13. Circuit électrique (CKT) équipé d'une entrée d'alimentation (IC) et d'une sortie d'alimentation (OC), ladite entrée (IC) étant adaptée pour être connectée à une sortie (OM) d'un dispositif interrupteur automatique (MT), ladite sortie (OC) étant adaptée pour être connectée à une entrée d'alimentation (I1, I2, 13) d'une unité électrique consommatrice (U1, U2, U3), le circuit (CKT) étant adapté pour mettre en oeuvre le procédé selon l'une quelconque des revendications 1 à 12 et comprenant :
des moyens de détection (DET) destinés à détecter au moins le courant qui circule à la sortie d'alimentation (OC) du circuit électrique (CKT),
des moyens de conduction (SW) destinés à connecter de façon commandée l'entrée d'alimentation (IC) et la sortie d'alimentation (OC) du circuit électrique (CKT),
des moyens de commande (CNT) connectés auxdits moyens de détection (DET) et auxdits moyens de conduction (SW), et adaptés pour commander lesdits moyens de conduction (SW) en fonction d'au moins le courant détecté par lesdits moyens de détection (DET).

14. Circuit (CKT) selon la revendication 13, dans lequel lesdits moyens de détection (DET) sont en outre adaptés pour détecter d'autres quantités d'alimentation à la sortie d'alimentation (OC) du circuit électrique, et dans lequel lesdits moyens de commande (CNT) sont adaptés pour commander lesdits moyens de conduction (SW) également en fonction desdites autres quantités d'alimentation.

15. Circuit (CKT) selon la revendication 13 ou 14, dans lequel lesdits moyens de conduction commandés (SW) sont adaptés pour connecter ladite entrée (IC) et ladite sortie (OC) à travers au moins un trajet de conduction ayant une résistance d'une valeur commandée.

16. Circuit (CKT) selon la revendication 13 ou 14 ou 15, dans lequel lesdits moyens de commande (CNT) sont adaptés pour commander lesdits moyens de conduction (SW) de manière à limiter le courant qui circule entre ladite entrée (IC) et ladite sortie (OC).

17. Circuit (CKT) selon une quelconque des revendications 13 à 16, dans lequel lesdits moyens de conduction (SW) comprennent essentiellement au moins un transistor (Q1, Q2, Q3, Q4).

18. Circuit (CKT) selon l'une quelconque des revendications 13 à 17, dans lequel lesdits moyens de commande (CNT) comprennent essentiellement une unité intelligente (UI) programmée et/ou programmable.

19. Circuit (CKT) selon la revendication 18, dans lequel ladite unité intelligente (UI) est adaptée pour permettre la commande à distance et/ou pour surveiller le circuit (CKT).

20. Système de protection (PR) équipé d'une unité d'alimentation (IP) et d'au moins une sortie d'alimentation (O1, 02, 03) comprenant :
un dispositif interrupteur automatique (MT) ayant une entrée (IM) connectée à l'entrée (IP) du système (PR) et une sortie (OM),
et
un circuit électrique (CKT) selon une quelconque des revendications 13 à 19, ayant une entrée (IC) connectée à la sortie (OM) du dispositif interrupteur (MT) et une sortie (OC) connectée à la sortie (O1, O2, O3) du système (PR).

21. Système de protection (PR) selon la revendication 20, dans lequel ledit système (PR) est muni d'une pluralité de sorties d'alimentation (O1, O2, O3), et dans lequel lesdites sorties (O1, O2, O3) du système (PR) sont connectées en parallèle entre elles et à la sortie (OC) dudit circuit (CKT).

22. Système de protection (PR) selon la revendication 21, dans lequel chaque sortie (O1, O2, O3) du système (PR) est munie d'un dispositif de protection électrique local propre (FS1, FS2, FS3), lesdits dispositifs de protection électrique locaux (FS1, FS2, FS3), étant coordonnés avec ledit dispositif interrupteur automatique (MT).

23. Système de protection (PR) selon la revendication 22, dans lequel ladite sortie (O1, O2, O3) du système (PR) est équipée de son propre dispositif pied de biche local commandé (CB, CB2, CB3) qui est capable de provoquer l'intervention des dispositifs de protection électrique locaux correspondants (FS1, FS2, FS3).

24. Système de protection (PR) selon l'une quelconque des revendications 20 à 23, comprenant en outre un dispositif (CT) pour la compensation thermique de la caractéristique du dispositif interrupteur automatique (MT).

25. Système de protection (PR) selon l'une quelconque des revendications 20 à 24, comprenant une unité de commande à distance et/ou de surveillance à distance (UCM).

26. Système d'alimentation en énergie comprenant un système de protection (PR) selon l'une quelconque des revendications 20 à 25.

27. Système électrique (SYS) équipé d'au moins une entrée d'alimentation propre (IS) qui doit être connectée à un réseau électrique d'alimentation extérieure (RA) et comprenant :
au moins une unité électrique consommatrice (U1, U2, U3) équipée d'au moins une entrée d'alimentation propre (I1, I2, I3), et
un système de protection (PR) selon l'une quelconque des revendications 20 à 25, connecté à l'entrée d'alimentation (IS) du système (SYS) et à l'entrée d'alimentation (I1, 12, 13) de l'unité ou de chaque unité (U1, U2, U3) et adapté pour distribuer l'énergie à l'intérieur du système (SYS) d'une façon protégée électriquement.
